# EUROPÄISCHE PATENTSCHRIFT

(11) **EP 3 427 224 B1**
(45) Veröffentlichungstag und Bekanntmachung des Hinweises auf die Patenterteilung: **12.06.2024**
(21) Anmeldenummer: 17703950.0
(22) Anmeldetag: 03.02.2017
(51) Int. Cl.: G06T 3/00, G02B 27/01

(54) **VERFAHREN, HEAD-UP-DISPLAY UND AUSGABESYSTEM ZUM PERSPEKTIVISCHEN TRANSFORMIEREN UND AUSGEBEN EINES BILDINHALTS SOWIE FAHRZEUG**
METHOD, HEAD-UP DISPLAY AND OUTPUT SYSTEM FOR THE PERSPECTIVE TRANSFORMATION AND OUTPUTTING OF IMAGE CONTENT, AND VEHICLE
PROCÉDÉ, AFFICHAGE TÊTE HAUTE, ET SYSTÈME DE RESTITUTION POUR TRANSFORMER EN PERSPECTIVE ET RESTITUER UN CONTENU D'IMAGE, ET VÉHICULE ASSOCIÉ

(30) Priorität: 11.03.2016 DE 102016204044
(43) Veröffentlichungstag der Anmeldung: 16.01.2019
(73) Patentinhaber: Bayerische Motoren Werke Aktiengesellschaft, 80809 München (DE)
(72) Erfinder: BROWN, Sean, 81541 München (DE); CIESLA, Christoph, 81247 München (DE); BAYERL, Tobias, 82140 Olching (DE)
(86) Internationale Anmeldenummer: PCT/EP2017/052381
(87) Internationale Veröffentlichungsnummer: WO 2017/153099

(56) Entgegenhaltungen:
- WO-A1-2006/031214
- US-A1- 2002 122 113
- US-A1- 2008 062 164
- US-A1- 2013 222 386
- US-A1- 2015 160 539
- US-B1- 6 192 393

## Beschreibung

Die Erfindung betrifft ein Verfahren und ein Ausgabesystem zum perspektivischen Transformieren und Ausgeben, insbesondere Anzeigen, eines gerenderten Bildinhalts sowie ein Fahrzeug mit einem solchen Ausgabesystem.

Fahrzeuge, insbesondere Kraftfahrzeuge, weisen in der Regel Vorrichtungen zum Anzeigen von Information auf. Die Information kann sowohl den Betriebszustand des Fahrzeugs betreffen, beispielsweise den Tankfüllstand, die Geschwindigkeit, den Status der Lichtanlage, usw., als auch dem Fahrer den Betrieb des Fahrzeugs erleichtern, beispielsweise durch Anzeigen von Navigationsinformation, Anzeigen von Einparkinformation, usw. Insbesondere ist es möglich, das Umfeld des Fahrzeugs sensorisch, etwa durch eine oder mehrere Kameras, zu erfassen, und dieses Fahrzeugumfeld beispielsweise als eine Draufsicht auf einer Anzeige im Fahrzeug darzustellen. Um dem Fahrer die Information möglichst komfortabel anzuzeigen, werden Head-Up-Displays verwendet, welche die anzuzeigende Information in das natürliche Gesichtsfeld des Fahrers projizieren, wo sie der Fahrer als virtuelles Bild visuell wahrnimmt. Das natürliche Gesichtsfeld entspricht dabei dem zum Betrieb des Fahrzeugs primär zu beachtenden Fahrzeugumfeld, insbesondere dem vor dem Fahrzeug liegenden Straßenverlauf. Bei Projektion der Information beispielsweise auf die Frontscheibe des Fahrzeugs kann der Fahrer die Information ablesen, ohne den Blick von der Straße nehmen zu müssen, was die Sicherheit der Fahrzeugnutzung erhöht.

Durch Krümmungen von optischen Elementen des Head-Up-Displays und der Frontscheibe und den Umstand, dass der Fahrer in der Regel unter einem Winkel auf die Frontscheibe blickt, wird das Abbild der anzuzeigenden Information verzerrt. Ebenso wird aber auch ein sensorisch, insbesondere durch eine oder mehrere Kameras, erfasstes Fahrzeugumfeld durch Krümmungen von abbildenden Elementen einer erfassenden Sensoreinrichtung verzerrt, etwa durch eine oder mehrere Kameras mit einer Fischaugenlinse. Um dem Fahrer die Information in einer gewünschten Weise, insbesondere unverzerrt, d.h. deutlich und gut erkennbar, darzustellen, muss die Abbildung der anzuzeigenden Information, insbesondere des Fahrzeugumfelds, daher an den Strahlengang von bilderzeugender Vorrichtung des Head-Up-Displays über optische Elemente des Head-Up-Displays und Frontscheibe des Fahrzeugs bis zum Auge des Fahrers einerseits oder an die Abbildungseigenschaften einer bilderzeugenden Vorrichtung andererseits angepasst werden.

Zur Anpassung an den Strahlengang oder die Abbildungseigenschaften der bilderzeugenden Vorrichtung wird die anzuzeigende Information als gerenderter bzw. erfasster Bildinhalt an ein Graphikmodul (Graphik-Engine) übergeben, welches den gerenderten bzw. erfassten Bildinhalt einer Transformation unterzieht. Die Transformation ist dazu ausgelegt, die Verzerrung, welche etwa durch gekrümmte, insbesondere optische, Elemente des Head-Up-Displays oder der bilderzeugenden Vorrichtung, eine gekrümmte Frontscheibe und/oder einen nicht senkrechten Blickwinkel auf die Frontscheibe entsteht, zu kompensieren. In anderen Worten wird durch die Transformation des Graphikmoduls der gerenderte Bildinhalt verzerrt, um dem Beobachter, insbesondere dem Fahrer, die visuelle Wahrnehmung eines entzerrten Abbildes des gerenderten Bildinhalts zu ermöglichen. Entsprechend kann durch die Transformation aber auch ein, insbesondere sensorisch, erfasster Bildinhalt derart aufbereitet werden, dass er, insbesondere direkt, auf einer bilderzeugenden Vorrichtung von dem Fahrer visuell entzerrt wahrgenommen werden kann.

US 2015/0160539 A1 offenbart ein System und Verfahren zum Kalibrieren einer Anzeigevorrichtung zur Vermeidung von Verzerrungen.

US 2008/0062164 A1 offenbart ein System und Verfahren zum Kalibrieren eines Bildprojektionssystems unter Verwendung eines Testbildes und mehreren Bilderfassungsvorrichtungen.

US 2013/0222386 A1 offenbart ein Verfahren zum Verarbeiten eines Originalbildes zur Projektion auf einen Projektionsschirm.

US 2002/0122113 A1 offenbart eine Anordnung von mehreren Kameras zum Aufnehmen eines zusammengesetzten Bildes.

WO 2006/031214 A1 offenbart ein System und ein Verfahren zum Darstellen einer allgemeinen zweidimensionalen räumlichen Transformation.

US 6,192,393 B1 offenbart ein Verfahren und ein System zum Darstellen von Bildern mit verschiedenen Auflösungen über ein Server-Client-Netzwerk.

Es ist eine Aufgabe der Erfindung, ein Verfahren, ein Anzeigesystem sowie ein Fahrzeug anzugeben, bei welchem das Transformieren und Ausgeben, insbesondere Anzeigen, eines gerenderten Bildinhalts flexibler und schneller durchgeführt wird.

Es ist eine weitere Aufgabe der Erfindung, eine einen gerenderten Bildinhalt transformierende Transformation einfacher an Änderungen in einem Strahlengang eines Head-Up-Displays, verursacht beispielsweise durch eine Änderung der Position eines Abbildes des gerenderten Bildinhalts auf einer Projektionsfläche des Head-Up-Displays, anzupassen.

Es ist eine weitere Aufgabe der Erfindung, eine einen erfassten Bildinhalt transformierende Transformation einfacher an Abbildungseigenschaften einer bilderzeugenden Vorrichtung, anzupassen, insbesondere wenn der sensorisch erfasste Bildinhalt auf der bilderzeugenden Vorrichtung verzerrt wiedergegeben würde.

Diese Aufgabe wird durch ein Verfahren nach Anspruch 1 sowie ein Fahrzeug nach Anspruch 12 gelöst. Vorteilhafte Ausgestaltungen der Erfindung sind Gegenstand der abhängigen Ansprüche. Die Offenbarung der Ansprüche wird ausdrücklich zu einem Teil der Beschreibung gemacht.

Hierin offenbart wird ein Verfahren zum perspektivischen Transformieren und Anzeigen eines gerenderten Bildinhalts durch ein Head-Up-Display, wobei der gerenderte, d.h. anzuzeigende, Bildinhalt in mehrere Bereiche, bevorzugt Kacheln bzw. Rechtecke, aufgeteilt wird. Die Kacheln, bzw. der in den einzelnen Kacheln enthaltene Bildinhalt, werden bzw. wird jeweils durch eine Perspektivtransformation transformiert und die einzelnen, perspektivisch transformierten Kacheln, bzw. in den perspektivisch transformierten Kacheln enthaltenen perspektivisch transformierten Bildinhalte, zu einem perspektivisch transformierten Bildinhalt zusammengefügt. Der perspektivisch transformierte Bildinhalt wird auf eine Projektionsfläche projiziert, welche dem Head-Up-Display zugeordnet ist.

Auch offenbart wird ein Verfahren zum perspektivischen Transformieren und Ausgeben eines, insbesondere sensorisch, etwa durch eine oder mehrere Kameras, erfassten Bildinhalts, wobei der erfasste, insbesondere anzuzeigende, Bildinhalt in mehrere Bereiche, bevorzugt Kacheln bzw. Rechtecke, aufgeteilt wird. Die Kacheln, bzw. der in den einzelnen Kacheln enthaltene Bildinhalt, werden bzw. wird vorzugsweise jeweils durch eine Perspektivtransformation transformiert und die einzelnen, perspektivisch transformierten Kacheln, bzw. in den perspektivisch transformierten Kacheln enthaltenen perspektivisch transformierten Bildinhalte, zu einem perspektivisch transformierten Bildinhalt zusammengefügt. Der perspektivisch transformierte Bildinhalt wird ausgegeben.

Auch offenbart wird ein Head-Up-Display zum perspektivischen Transformieren und Anzeigen eines gerenderten Bildinhalts, welches eine Steuereinheit sowie eine Projektionseinheit aufweist. Insbesondere ist das erfindungsgemäße Head-Up-Display dazu eingerichtet, das perspektivische Transformieren und Anzeigen eines gerenderten Bildinhalts nach dem oben beschriebenen Verfahren durchzuführen. Bevorzugt weist die Steuereinheit ein erstes Modul, welches zum Aufteilen des gerenderten, d.h. anzuzeigenden, Bildinhalts in mehrere Bereiche, bevorzugt Kacheln bzw. Rechtecke, eingerichtet ist, ein zweites Modul, insbesondere ein Graphikmodul, welches zum Transformieren der einzelnen Kacheln, bzw. dem in den einzelnen Kacheln enthaltenen Bildinhalt, durch jeweils eine Perspektivtransformation, insbesondere über eine Graphik-Programmierschnittstelle, eingerichtet ist, sowie ein drittes Modul, welches zum Zusammensetzen der einzelnen, perspektivisch transformierten Kacheln zu einem transformierten Bildinhalt eingerichtet ist, auf. Ferner ist die Projektionseinheit vorzugsweise zum Projizieren des perspektivisch transformierten Bildinhalts auf eine Projektionsfläche, die dem Head-Up-Display zugeordnet ist, eingerichtet.

Auch offenbart wird ein Ausgabesystem zum perspektivischen Transformieren und Ausgeben eines, insbesondere sensorisch, etwa durch eine oder mehrere Kameras, erfassten Bildinhalts, welches eine Steuereinheit sowie eine Ausgabeeinheit, insbesondere Datenschnittstellt, aufweist. Insbesondere ist das erfindungsgemäße Ausgabesystem dazu eingerichtet, das perspektivische Transformieren und Ausgeben eines gerenderten Bildinhalts nach dem zweiten Aspekt der Erfindung durchzuführen. Bevorzugt weist die Steuereinheit ein erstes Modul, welches zum Aufteilen des erfassten, insbesondere anzuzeigenden, Bildinhalts in mehrere Bereiche, bevorzugt Kacheln bzw. Rechtecke, eingerichtet ist, ein zweites Modul, insbesondere ein Graphikmodul, welches zum Transformieren der einzelnen Kacheln, bzw. dem in den einzelnen Kacheln enthaltenen Bildinhalt, durch jeweils eine Perspektivtransformation, insbesondere über eine Graphik-Programmierschnittstelle, eingerichtet ist, sowie ein drittes Modul, welches zum Zusammensetzen der einzelnen, perspektivisch transformierten Kacheln zu einem transformierten Bildinhalt eingerichtet ist, auf. Ferner ist die Ausgabeeinheit zum Ausgeben des perspektivisch transformierten Bildinhalts eingerichtet.

Das erste, zweite und dritte Modul kann jeweils als Hardware- oder Softwaremodul ausgebildet sein. Insbesondere können ein oder zwei Module als Softwaremodul und das oder die restlichen Module als Hardwaremodul ausgebildet sein.

Bevorzugt wird ein als Softwaremodul ausgebildetes erstes, zweites oder drittes Modul auf einem oder mehreren Prozessoren, insbesondere Hauptprozessor oder Hauptprozessoren (CPU) der Steuereinheit, ausgeführt.

Bevorzugt weist ein als Hardwaremodul ausgebildetes erstes, zweites oder drittes Modul wenigstens eine Graphikkarte mit einem Graphikprozessor (GPU) auf.

Auch offenbart wird ein Fahrzeug, welches ein Head-Up-Display oder ein Anzeigesystem wie oben beschrieben aufweist.

Unter einem Bildinhalt im Sinne der Erfindung ist insbesondere das optische Abbild eines oder mehrerer Objekte zu verstehen. Beispielsweise ist ein in einem Bild dargestelltes Objekt ein Bildinhalt (etwa ein Baum). Während sich das Bild unter einer perspektivischen Transformation ändert, d.h. zu einem anderen Bild wird, ändert sich jedoch der Bildinhalt nicht (das geänderte Bild zeigt nach wie vor den, ggf. verzerrten, Baum).

Erfassen im Sinne der vorliegenden Beschreibung wird mittels einer Sensoreinrichtung, insbesondere mittels eines oder mehrerer optischer Sensoren, durchgeführt. Vorzugsweise werden dabei ein oder mehrere Objekte, beispielsweise ein Fahrzeugumfeld, aufgenommen. Dabei kann das oder die Objekte auch sequentiell, also im Wesentlichen kontinuierlich, aufgenommen (gefilmt) werden. Insbesondere kann ein erfasstes Objekt durch eine Anzeige, etwa einer Anzeigeeinheit oder eine Projektionseinheit, dargestellt bzw. optisch abgebildet werden.

Unter einer Kachel im Sinne der vorliegenden Beschreibung ist insbesondere ein Teil oder Bereich eines Bildes oder eines Bildinhalts zu verstehen. Vorzugsweise weist eine Kachel eines Bildes oder Bildinhaltes einen Teil des Bildinhaltes auf. Bevorzugt weist eine Kachel eine rechteckige Form auf. Alternativ kann eine Kachel aber auch eine andere Form aufweisen, etwa als Trapez, Parallelogramm, Rhombus oder Dreieck ausgebildet sein. Insbesondere lässt sich ein Bild oder Bildinhalt lückenlos in Kacheln zerlegen bzw. aufteilen.

Unter einem Ausgeben im Sinne der Erfindung ist ein Bereitstellen von perspektivisch transformiertem Bildinhalt zu verstehen. Der Bildinhalt wird dabei einer Anzeigeeinheit zur visuellen Darstellung bereitgestellt. Zusätzlich kann der Bildinhalt als Daten, insbesondere über eine Datenschnittstelle, bereitgestellt werden. Bevorzugt wird der Bildinhalt dabei einer Fahrerassistenzeinrichtung, bevorzugt zur Ableitung von Steuerungsparametern für ein hoch- oder halbautomatisches, insbesondere autonomes, Fahren, bereitgestellt.

Unter einer Anzeigeeinheit ist eine bildgebende Vorrichtung zu verstehen, welche ein Bild oder Bildinformation darstellen oder anzeigen kann. Beispielsweise kann eine Anzeigeeinheit zumindest ein teilweise als Anzeige (Display) oder Bildschirm ausgebildet sein.

Die Abbildungseigenschaften einer Anzeigeeinheit oder einer bilderzeugenden Vorrichtung sind im Sinne der vorliegenden Beschreibung insbesondere stets in Bezug auf bildgebende Eigenschaften einer einen Bildinhalt erfassenden Sensoreinrichtung, etwa einer oder mehrerer Kameras und/oder Linsen, zu verstehen. Beispielsweise würde ein durch eine Fischaugenlinse erfasster Bildinhalt auf einer entsprechend gekrümmten Anzeigeeinheit unverzerrt dargestellt. Bei einer ebenen Anzeigeeinheit wäre dagegen eine entsprechende perspektivische Transformation des Bildinhalts notwendig, um den Bildinhalt auf der Anzeigeeinheit unverzerrt darzustellen.

Die Erfindung basiert insbesondere auf dem Ansatz, einen gerenderten Bildinhalt, welcher anzuzeigende Information enthält, in mehrere Kacheln, bevorzugt Rechtecke bzw. rechteckige Kacheln, aufzuteilen und diese Kacheln separat mit jeweils einer Perspektivtransformation zu transformieren. In anderen Worten wird die Perspektivtransformation des Bilds, d.h. des gerenderten Bildinhalts, modular durchgeführt. Anschließend werden die perspektivisch transformierten Kacheln, wieder zu einem nun perspektivisch transformierten Bild bzw. Bildinhalt zusammengesetzt, welches bzw. welcher in bzw. von einem Head-Up-Display auf eine Projektionsfläche projiziert oder einer Ausgabeeinheit ausgegeben, insbesondere auf einer Anzeigeeinheit angezeigt, wird und von einem Beobachter, insbesondere einem Fahrer, etwa in einem Fahrzeug mit einem Head-Up-Display, aufgrund der vorgenommenen Perspektivtransformation vorzugsweise unverzerrt, d.h. deutlich und gut erkennbar, visuell wahrgenommen werden kann.

Die Perspektivtransformation einzelner Kacheln ist dabei vorzugsweise auf die jeweils einzelne perspektivisch zu transformierende Kachel abgestimmt. Macht eine Änderung im Strahlengang des Head-Up-Displays die Anpassung des anzuzeigenden Bilds, d.h. des gerenderten Bildinhalts, notwendig, kann dies durch Abstimmung bzw. Anpassung einzelner Perspektivtransformationen bewirkt werden.

Insbesondere ist es nicht notwendig, jede einzelne der Perspektivtransformationen abzustimmen bzw. anzupassen, bzw. eine Anpassung, d.h. Änderung, einer einzigen globalen Perspektivtransformation, welche das gesamte anzuzeigende Bild, d.h. den gesamten gerenderten Bildinhalt, transformiert, vorzunehmen. Das erfindungsgemäßes Verfahren erfordert gegenüber der Anpassung jeder einzelnen Perspektivtransformation oder einer einzigen globalen Perspektivtransformation eine niedrigere Rechenleistung und erhöht daher die Bildrate, mit welcher die transformierten Bilder durch das Head-Up-Display oder die Anzeigeeinheit angezeigt werden können.

Vorzugsweise ist es durch die Erfindung möglich, auf das perspektivische Transformieren einzelner Kacheln, sofern dies für eine verzerrungsfreie Darstellung bzw. Anzeige des zusammengesetzten und transformierten Bilds, d.h. Bildinhalts, nicht notwendig ist, zu verzichten. Insbesondere wenn nur ein Teil des anzuzeigenden Bilds, d.h. des gerenderten oder erfassten Bildinhalts, durch eine Perspektivtransformation bzw. Transformation zur Anpassung an den Strahlengang des Head-Up-Displays bzw. der Beobachterposition einerseits oder an eine Abbildungseigenschaft der Anzeigeeinheit andererseits ver- bzw. entzerrt werden muss, kann durch die modulare Perspektivtransformation der Rechenaufwand zur perspektivischen Ver- bzw. Entzerrung vermindert werden, indem einzelne Kacheln, deren Bildinhalt nicht an den Strahlengang oder die Abbildungseigenschaft angepasst werden muss, nicht transformiert werden.

Vorzugsweise erlaubt die Perspektivtransformation einzelner Kacheln, d.h. eine modulare Perspektivtransformation, darüber hinaus eine speicher- und rechenzeitsparende Perspektivtransformation durch ein Graphikmodul, das vorzugsweise weitverbreitet ist und insbesondere auf aktuellen Mikroprozessoren stabil läuft, insbesondere auf verschiedenen Plattformen. Weiter vorzugsweise ist dieses Graphikmodul dazu ausgebildet, Vektorgraphiken insbesondere hardware-beschleunigt zu verarbeiten, so dass einzelne Perspektivtransformationen auf Vektorbasis besonders schnell und effizient durchgeführt werden können.

Insgesamt ermöglicht die Erfindung ein schnelles und flexibles Transformieren und Anzeigen eines gerenderten oder erfassten Bildinhalts.

Vorzugsweise kann der perspektivisch transformierte Bildinhalt an eine Fahrerassistenzeinrichtung ausgegeben und zur Bestimmung von Steuerungsparametern für ein hoch- oder halbautomatisches, insbesondere autonomes, Fahren herangezogen werden. Dabei wird der Bildinhalt bevorzugt mittels aus dem Stand der Technik bekannter Algorithmen zur Bilderkennung verarbeitet, wobei der Bildinhalt vorzugsweise in der Weise perspektivisch transformiert wird, dass diese Algorithmen besonders zuverlässig und/oder effizient ausgeführt werden können.

Beispielsweise ist es möglich, anhand des perspektivisch transformierten Bildinhalts eine, insbesondere in unmittelbarer Umgebung des Fahrzeugs, genaue Bestimmung von Objekten bzw. einem Freiraum zu gewährleisten, unter deren Berücksichtigung das Fahrzeug zuverlässig, d.h. kollisionsfrei, gesteuert werden kann.

Die einzelnen Kacheln werden in der Weise transformiert, dass der perspektivisch transformierte Bildinhalt von der Anzeigeeinheit in wenigstens einem ersten Bereich, insbesondere in einer Mitte des Bilds bzw. des Bildinhalts, ungestaucht, insbesondere unverzerrt, und in wenigstens einem zweiten Bereich, insbesondere am Bildrand bzw. am Rand des Bildinhalts, gestaucht, d.h. verzerrt, dargestellt wird. Dadurch lässt sich der Bildinhalt vorteilhaft nichtlinear darstellen, so dass beispielsweise in einer Draufsicht des Fahrzeugs und/oder der Fahrzeugumgebung auch bei großem Blickwinkel Details in unmittelbarer Umgebung des Fahrzeugs gut erkennbar dargestellt werden können.

In einer weiteren vorteilhaften Ausgestaltung des Verfahrens zum perspektivischen Transformieren und Ausgeben, insbesondere Anzeigen, eines gerenderten Bildinhalts wird beim Transformieren jede einzelne Kachel hinsichtlich mindestens einer der folgenden Merkmale perspektivisch transformiert: Trapezform, Wölbung, Streckung bzw. Stauchung, Rotation, Versatz. Insbesondere kann jede einzelne Kachel auch durch eine Kombination wenigstens zwei dieser Merkmale perspektivisch transformiert werden. Dadurch ist eine zuverlässige Anpassung des anzuzeigenden Bildinhalts an den Strahlengang des Head-Up-Displays oder die Abbildungseigenschaften der Anzeigeeinheit möglich.

In einer weiteren vorteilhaften Ausgestaltung des Verfahrens zum perspektivischen Transformieren und Ausgeben, insbesondere Anzeigen, eines gerenderten oder erfassten Bildinhalts weisen angrenzende Kacheln überlappende Bildinhalte auf. Insbesondere weisen die überlappenden Bildinhalte jeweils eine Breite von einem, zwei oder drei Bildpunkten auf. Dadurch wird sichergestellt, dass die perspektivisch transformierten Kacheln beim Zusammensetzen zu einem perspektivisch transformierten Bildinhalt ebenfalls überlappenden, perspektivisch transformierten Bildinhalt aufweisen bzw. die Kanten der perspektivisch transformierten Kacheln insbesondere bündig abschließen. Insbesondere wird damit zuverlässig verhindert, dass der zusammengesetzte, perspektivisch transformierte Bildinhalt Bereiche aufweist, welche nicht durch mindestens eine perspektivisch transformierte Kachel abgedeckt und daher als farbneutrale, insbesondere schwarze oder weiße, Bildpunkte dargestellt werden. Vorzugsweise wird durch dieses Merkmal des Verfahrens auch das Entstehen dieser Bereiche durch das Anwenden einer Kantenglättung, insbesondere durch einen Glättungsfilter, vermieden.

In einer weiteren vorteilhaften Ausgestaltung des Verfahrens zum perspektivischen Transformieren und Ausgeben, insbesondere Anzeigen, eines gerenderten oder erfassten Bildinhalts liegt der Bildinhalt als Rastergraphik vor, wobei durch die Perspektivtransformation einzelne Bildpunkte einer Kachel verschoben werden. Dadurch kann der gerenderte oder erfasste Bildinhalt besonders einfach in verschiedene Bereiche, bevorzugt Kacheln bzw. Rechtecke bzw. rechteckige Kacheln, aufgeteilt werden, wobei jeweils eine vorgegebene Anzahl an Bildpunkten der Rastergraphik einem Bereich, bzw. einer Kachel, zugeordnet werden. Durch die Perspektivtransformation werden die einzelnen, zu jeweils einer Kachel gehörenden Bildpunkte der Rastergraphik verschoben. Somit kann die Perspektivtransformation besonders einfach realisiert werden.

Vorzugsweise weist die Rastergraphik eine bestimmte Farbtiefe, insbesondere 32, 24, 16, 8 oder 4 bit, auf. Weiter vorzugsweise kann die Rastergraphik auch eine Farbtiefe aufweisen, die zwischen diesen Werten liegt. Weiter vorzugsweise kann die Rastergraphik auch eine Farbtiefe aufweisen, die größer als 32 bit oder kleiner als 4 bit ist. Weiter vorzugsweise weisen unterschiedliche Bildpunkte der Rastergraphik jeweils unterschiedliche Farbtiefen auf. Insbesondere weisen bevorzugt jeweils einige zusammenhängende Bildpunkte der Rastergraphik, welche jeweils zu einer einzelnen Kachel gehören, die gleiche Farbtiefe auf. Insbesondere bevorzugt ist die Farbtiefe einer einzelnen Kachel nur so hoch wie zur farbechten Darstellung des in den einzelnen Kacheln enthaltenden Bildinhalts notwendig. Dadurch benötigt insbesondere der gerenderte Bildinhalt besonders wenig Speicherplatz, insbesondere in einem Puffer-Speicher, und die Perspektivtransformationen der Kacheln können besonders effizient durchgeführt werden.

In einer weiteren vorteilhaften Ausgestaltung des Verfahrens zum perspektivischen Transformieren und Ausgeben, insbesondere Anzeigen, eines gerenderten oder erfassten Bildinhalts wird bei der Perspektivtransformation eine Interpolation, insbesondere eine lineare Interpolation, einzelner Bildpunkte einer Kachel, insbesondere der Bildpunkte, welche an durch die Perspektivtransformation verschobene Bildpunkte grenzen und/oder zwischen diesen liegen, durchgeführt. Dadurch wird zuverlässig vermieden, dass Bereiche mit Bildpunkten, denen kein Farbwert zugeordnet wurde, entstehen. Vorzugsweise ist die Anzahl der Bildpunkte pro Kachel gering, so dass einzelne Bildpunkt bei der Perspektivtransformation nicht über große Abstände verschoben werden. In diesem Fall liefert insbesondere eine lineare Interpolation der zwischen den bei der Perspektivtransformation verschobenen Bildpunkten liegenden Bildpunkte einen perspektivisch transformierten Bildinhalt, dessen von einem Head-Up-Display oder einer Anzeigeeinheit erzeugtes Abbild deutlich und klar, d.h. insbesondere ohne Artefakte, visuell wahrgenommen werden kann. Eine lineare Interpolation verursacht insbesondere nur einen geringen Rechenaufwand, d.h. die Belastung eines berechnenden Prozessors ist gering, weswegen die Perspektivtransformation schnell und effizient durchgeführt werden kann.

In einer weiteren vorteilhaften Ausgestaltung des Verfahrens zum perspektivischen Transformieren und Ausgeben, insbesondere Anzeigen, eines gerenderten oder erfassten Bildinhalts werden die einzelnen Kacheln durch Multiplikation mit einer Transformationsmatrix perspektivisch transformiert, was den Einsatz von Vektorgraphiktechnologie erlaubt. Vorzugsweise ist die Transformationsmatrix eine 3x3-Matrix. Die Multiplikation mit einer Transformationsmatrix ist eine besonders einfache und präzise Weise, eine Transformation durchzuführen. Eine entsprechende Perspektivtransformation kann daher besonders schnell und effizient, insbesondere von einem Graphikmodul, durchgeführt werden. Insbesondere ist es daher möglich, für die Bildrate, mit welcher gerenderte oder erfasste Bildinhalte perspektivisch transformiert werden, einen Wert von 30 bis 90, bevorzugt von 45 bis 75, besonders bevorzugt von im Wesentlichen 60 perspektivisch transformierten Bildinhalten pro Sekunde zu erreichen. In einer besonders vorteilhaften Ausgestaltung des Verfahrens ist es möglich, einen Wert von 90 bis 160, bevorzugt von im Wesentlichen 120 perspektivisch transformierten Bildinhalten pro Sekunde zu erreichen.

Vorzugsweise werden bei der Matrixmultiplikation mit einer Transformationsmatrix die Positionen einzelner Bildpunkte einer Kachel, insbesondere der vier Eckpunkte, die bevorzugt durch Stützvektoren gegeben sind, mit der Transformationsmatrix multipliziert. Stützvektoren sind hierbei Vektoren, welche die Position eines Bildpunktes relativ zu einem Ursprung angeben, wobei der Ursprung insbesondere ein Eck- oder Mittelpunkt einer Kachel oder des Bilds, d.h. des gerenderten oder erfassten Bildinhalts, sein kann. Durch die Multiplikation der Stützvektoren mit der Transformationsmatrix verschiebt sich die Lage der einzelnen Bildpunkte der Kachel relativ zu dem Ursprung. Vorzugsweise werden Bildpunkte, die zwischen, insbesondere angrenzend an diesen verschobenen Bildpunkten liegen, interpoliert, insbesondere durch eine lineare Interpolation. Bevorzugt werden dadurch Lücken in dem Bildinhalt der perspektivisch transformierten Kachel geschlossen.

Bevorzugt kann durch die Wahl der Anzahl bzw. der Ausmaße, d.h. der Größe oder Fläche, der Kacheln beim Aufteilen des anzuzeigenden Bildinhalts die Anzahl der insbesondere linear zu interpolierenden Bildpunkte bestimmt, insbesondere begrenzt, werden, da mit steigender Anzahl der Kacheln die Anzahl der Bildpunkte pro Kachel sinkt, welche perspektivisch transformiert werden müssen. Dadurch wird sichergestellt, dass insbesondere eine lineare Interpolation von Bildpunkten, die zwischen verschobenen Bildpunkten, insbesondere grenzend an verschobenen Bildpunkten, liegen, klaren und deutlichen, perspektivisch transformierten Bildinhalt auf den Kacheln bzw. dem zusammengesetzten perspektivisch transformierten und über das Head-Up-Display oder die Anzeigeeinheit anzuzeigenden bzw. durch die Ausgabeeinheit auszugebenden Bildinhalt erzeugt, d.h. perspektivisch transformierten Bildinhalt ohne Artefakte.

Vorzugsweise wird bzw. werden die Anzahl bzw. die Ausmaße der Kacheln größer als eine kritische Anzahl bzw. Größe gewählt, bei welcher die Anzahl der insbesondere linear zu interpolierenden Bildpunkte so klein ist, dass Artefakte, insbesondere Ecken, im perspektivisch transformierten Bildinhalt auftreten. Dadurch wird sichergestellt, dass der zusammengesetzte, perspektivisch transformierte und über das Head-Up-Display oder die Anzeigeeinheit anzuzeigende bzw. durch die Ausgabeeinheit auszugebende Bildinhalt keine Artefakte, insbesondere Ecken, aufweist. Die Anzahl und/oder Größe der Kacheln wird so gewählt, dass die Kacheln überlappen, insbesondere jeweils mit einem oder zwei Bildpunkten.

In einer weiteren vorteilhaften Ausgestaltung des Verfahrens zum perspektivischen Transformieren und Ausgeben, insbesondere Anzeigen, eines gerenderten oder erfassten Bildinhalts wird die Transformationsmatrix aus einer Vielzahl von Transformationsmatrizen gewählt. Insbesondere beinhaltet die Vielzahl der Transformationsmatrizen dabei vorzugsweise jeweils eine Transformationsmatrix für jede perspektivisch zu transformierende Kachel. Dadurch kann sichergestellt werden, dass die Transformationsmatrizen an den Strahlengang der Abbildung der jeweils perspektivisch zu transformierende Kachel in dem Head-Up-Display einerseits oder an die Abbildungseigenschaften der Anzeigeeinheit, insbesondere in Bezug auf die bildgebenden Eigenschaften der den Bildinhalt erfassenden Sensoreinrichtung, andererseits angepasst sind, bzw. insbesondere einzeln an Änderungen im Strahlengang der Abbildung oder der Abbildungseigenschaften der Anzeigeeinheit angepasst werden können. Weiter vorzugsweise beinhaltet die Vielzahl der Transformationsmatrizen verschiedene perspektivische Transformationen.

Durch die Verwendung von Transformationsmatrizen ist jegliche vektorielle perspektivische Transformation realisierbar. Dadurch kann die Perspektivtransformation besonders gut an den Strahlengang oder die Abbildungseigenschaften angepasst werden. Besonders bevorzugt betrifft die mit einer Transformationsmatrix aus der Vielzahl der Transformationsmatrizen durchgeführte perspektivische Transformation mindestens eines der folgenden Merkmale: Trapezform, Wölbung, Streckung bzw. Stauchung, Rotation, Versatz.

In einer weiteren vorteilhaften Ausgestaltung des Verfahrens zum perspektivischen Transformieren und Ausgeben, insbesondere Anzeigen, eines gerenderten oder erfassten Bildinhalts wird das perspektivische Transformieren der einzelnen Kacheln von einem Graphikmodul, bevorzugt über eine Graphik-Programmierschnittstelle, insbesondere OpenVG, durchgeführt. Das Verwenden eines Graphikmoduls beschleunigt die perspektivische Transformation der einzelnen Kacheln, insbesondere durch eine Hardwarebeschleunigung, signifikant und verringert die Rechenbelastung eines zentralen Prozessors (CPU). Vorzugsweise wird eine Graphik-Programmierschnittstelle verwendet, die weit verbreitet ist und standardmäßig auf Mikroprozessoren zur Verfügung steht. Weiter vorzugsweise steht die Graphik-Programmierschnittstelle auf mehreren Plattformen zur Verfügung. Ferner erlaubt die verwendete Graphik-Programmierschnittstelle vorzugsweise die Verwendung eines Graphikmoduls, welches die hardware-beschleunigte Verarbeitung bzw. Berechnung von Vektorgraphik zur Verfügung stellt.

In einer weiteren vorteilhaften Ausgestaltung des Verfahrens zum perspektivischen Transformieren und Ausgeben, insbesondere Anzeigen, eines gerenderten oder erfassten Bildinhalts werden die perspektivisch transformierten Kacheln in einem Puffer-Speicher abgelegt. Der Puffer-Speicher erlaubt einen besonders schnellen Zugriff auf die darin abgelegten perspektivisch transformierten Kacheln, insbesondere beim Zusammensetzen zu einem gesamten perspektivisch transformierten, anzuzeigenden oder auszugebenden Bild, bzw. Bildinhalt.

In einer weiteren vorteilhaften Ausgestaltung des Verfahrens zum perspektivischen Transformieren und Ausgeben, insbesondere Anzeigen, eines gerenderten oder erfassten Bildinhalts wird nur ein Teil der mehreren Kacheln perspektivisch transformiert und die restlichen transformierten Kacheln zum Zusammensetzen des transformierten Bildes aus dem Puffer-Speicher geladen. Dadurch kann die Zusammensetzung des perspektivisch transformierten, anzuzeigenden Bilds, bzw. Bildinhalts, signifikant beschleunigt werden. Insbesondere kann damit eine Bildrate, mit der gerenderter oder erfasster Bildinhalt perspektivisch transformiert wird, von 30 bis 90, bevorzugt von 45 bis 75, besonders bevorzugt von im Wesentlichen 60 perspektivisch transformierten Bildinhalten pro Sekunde erreicht werden. In einer besonders vorteilhaften Ausgestaltung des Verfahrens ist es möglich, einen Wert von 90 bis 160, bevorzugt von im Wesentlichen 120 perspektivisch transformierten Bildinhalten pro Sekunde zu erreichen.

In einer weiteren vorteilhaften Ausprägung des Verfahrens zum perspektivischen Transformieren und Ausgeben, insbesondere Anzeigen, eines gerenderten oder erfassten Bildinhalts wird nur der Teil der mehreren Kacheln perspektivisch transformiert, welcher Elemente des Bildinhalts enthält, die sich bezüglich eines zuvor zu transformierenden und auszugebenden, insbesondere anzuzeigenden und/oder zu projizierenden, Bildinhalts geändert haben. Insbesondere werden die restlichen, zum Zusammensetzen der perspektivisch transformierten Kacheln zu einem perspektivisch transformierten, anzuzeigenden Bildinhalt benötigten perspektivisch transformierten Kacheln aus dem Puffer-Speicher geladen. Dadurch wird insbesondere sichergestellt, dass ein von den Perspektivtransformationen beanspruchter Prozessor nur die Teile des gerenderten oder erfassten Bildinhalts verarbeitet, welche sich von dem zuvor perspektivisch transformierten und ausgegebenen, insbesondere angezeigten, Bildinhalt unterscheiden, d.h. geänderte anzuzeigende Information bzw. eine geänderte Darstellung der anzuzeigenden Information enthalten, wodurch die Rechenleistung dieses Prozessors im Vergleich zur Durchführung einer Perspektivtransformation aller Kacheln signifikant vermindert wird. Dadurch kann die Rechenleistung eines solchen Prozessors besonders effizient für Berechnungen eingeteilt werden und eine Bildrate, mit der gerenderter oder erfasster Bildinhalt perspektivisch transformiert wird, von 30 bis 90, bevorzugt von 45 bis 75, besonders bevorzugt von im Wesentlichen 60 perspektivisch transformierten Bildinhalten pro Sekunde erreicht werden. In einer besonders vorteilhaften Ausgestaltung des Verfahrens ist es möglich, einen Wert von 90 bis 160, bevorzugt von im Wesentlichen 120 perspektivisch transformierten Bildinhalten pro Sekunde zu erreichen.

Bei dem Verfahren zum perspektivischen Transformieren und Ausgeben, insbesondere Anzeigen, eines gerenderten Bildinhalts weisen verschiedene Teile der mehreren Kacheln unterschiedliche Farbtiefen auf, insbesondere 32, 24, 16, 8 und 4 bit. Weiter vorzugsweise können verschiedene Teile der mehreren Kacheln auch eine Farbtiefe aufweisen, die zwischen diesen Werten liegt. Weiter vorzugsweise können verschiedene Teile der mehreren Kacheln auch eine Farbtiefe aufweisen, die größer als 32 bit oder kleiner als 4 bit ist. Insbesondere weisen die Kacheln jeweils die geringstmögliche Farbtiefe auf, bei der der jeweils enthaltenen Bildinhalt noch farbecht, d.h. ohne Verminderung der Farbqualität, angezeigt bzw. dargestellt werden kann. Die Perspektivtransformationen, insbesondere die vorzugsweise linearen Interpolationen einzelner Bildpunkte, der mehreren Kacheln werden mit den unterschiedlichen Farbtiefen bei der jeweiligen Farbtiefe der perspektivisch zu transformierenden Kachel durchgeführt. Dadurch wird sichergestellt, dass die Perspektivtransformation bzw. die perspektivisch transformierte Kachel nur wenig Speicherplatz bzw. die vorzugsweise lineare Interpolation wenig Rechenbedarf benötigt. Dadurch können die Perspektivtransformationen, insbesondere die vorzugsweise linearen Interpolationen einzelner Bildpunkte, besonders schnell und effizient durchgeführt werden.

In einer weiteren vorteilhaften Ausgestaltung des Verfahrens zum perspektivischen Transformieren und Ausgeben, insbesondere Anzeigen, eines gerenderten oder erfassten Bildinhalts werden die mehreren Kacheln bei der perspektivischen Transformation durch eine Punkt- oder Linienspiegelung gespiegelt und zu einem perspektivisch transformierten, gespiegelten Bildinhalt zusammengesetzt. Dadurch kann die Bildorientierung des perspektivisch transformierten, anzuzeigenden Bildinhalts an den Strahlengang des Head-Up-Displays oder an Abbildungseigenschaften der Anzeigeeinheit angepasst werden. Insbesondere kann durch die Spiegelung die Verwendung zusätzlicher optischer Elemente im Head-Up-Display, welche die Bildorientierung des perspektivisch transformierten Bildinhalts zur fehlerfreien Abbildung auf der Projektionsfläche des Head-Up-Displays ändern, insbesondere drehen bzw. spiegeln, verzichtet werden. Dadurch lässt sich insbesondere das Head-Up-Display einen besonders einfachen realisieren.

Weitere Merkmale, Vorteile und Anwendungsmöglichkeiten der Erfindung ergeben sich aus der nachfolgenden Beschreibung im Zusammenhang mit den Figuren. Es zeigen wenigstens teilweise schematisch:
- Fig. 1: eine Ausführungsform des Verfahrens zum Transformieren und Ausgeben, insbesondere Anzeigen, eines gerenderten oder erfassten Bildinhalts durch ein Head-Up-Display oder eine Ausgabeeinheit;
- Fig. 2: eine Darstellung eines mit einer Ausführungsform des erfindungsgemäßen Verfahrens in mehrere Kacheln aufgeteilten, gerenderten Bildinhalts;
- Fig. 3: eine Darstellung einer Perspektivtransformation einer Kachel;
- Fig. 4: eine Darstellung eines mit einer Ausführungsform des erfindungsgemäßen Verfahrens durch Perspektivtransformationen einzelner Kacheln transformierten Bildinhalts;
- Fig. 5: Darstellungen mehrerer Resultate grundlegender Perspektivtransformationen;
- Fig. 6: eine Darstellung eines Gitters und eines verzerrten Gitters;
- Fig. 7: eine Darstellung von Einhüllenden von Stützpunkten auf einer Projektionsfläche, und;
- Fig. 8: eine Darstellung eines erfassten Bildinhalts und seiner Perspektivtransformation.

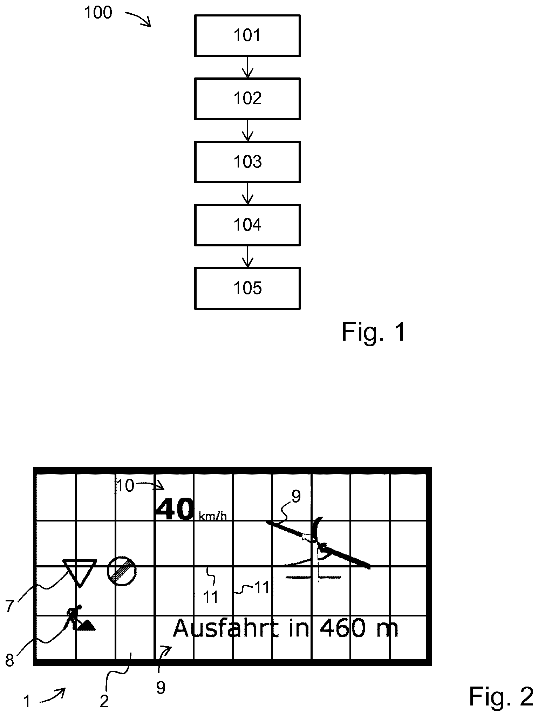

Figur 1 zeigt eine Ausführungsform des Verfahrens 100 zum Transformieren und Ausgeben, insbesondere Anzeigen, eines gerenderten oder erfassten Bildinhalts durch ein Head-Up-Display oder eine Ausgabeeinheit, insbesondere Anzeigeeinheit, welches nachfolgend in Bezug auf die weiteren Figuren erläutert wird.

Figur 2 zeigt eine Darstellung eines mit einer Ausführungsform des erfindungsgemäßen Verfahrens 100 in mehrere Kacheln 2 aufgeteilten, gerenderten Bildinhalts 1. Der Bildinhalt 1 enthält mehrere Elemente 7, 8, 9, 10, welche den Betrieb des Fahrzeugs mittelbar und/oder unmittelbar betreffen, d.h. zu beachtende Verkehrsregeln 7, Warnhinweise 8, Navigationsinformation 9 und/oder Geschwindigkeitsinformation 10. Ein Element 7, 8, 9 10 ist jeweils ein Teil des gesamten Bildinhalts 1. Die Elemente 7, 8, 9 werden vorzugsweise als Piktogramme angezeigt und/oder dargestellt, bzw. abgebildet. Weiter vorzugsweise werden die Elemente 9, 10 als Schriftzeichen und/oder Schriftzug, insbesondere Nummernzeichen, angezeigt und/oder dargestellt, bzw. abgebildet. Der Bildinhalt 1 ist gerendert, so dass dieser als digitales Bild, insbesondere als Rastergraphik vorliegt. Dadurch kann der Bildinhalt 1 leicht durch digitale Verfahren, insbesondere Transformationen, vorzugsweise Perspektivtransformationen, verarbeitet, d.h. geändert und/oder modifiziert, insbesondere verzerrt, werden.

Der gerenderte Bildinhalt 1 wird in mehrere Bereiche, insbesondere Kacheln 2, vorzugsweise rechteckige Kacheln 2, in Verfahrensschritt 101 aufgeteilt. Weiter vorzugsweise sind die Kacheln 2 quadratisch. Die Ränder der Kacheln 2 sind in dem gezeigten Ausführungsbeispiel zur besseren Anschaulichkeit durch horizontale und vertikale Linien 11 markiert.

Vorzugsweise umschließen einzelne Kacheln 2 einzelne Elemente 7, 8, 9, 10 oder Teile der Elemente 7, 8, 9, 10, d.h. der in den einzelnen Kacheln 2 enthaltene Teil des gesamten Bildinhalts 1 stellt einzelne Elemente 7, 8, 9, 10 oder Teile der Elemente 7, 8, 9, 10 dar.

Verschiedene Kacheln 2 weisen unterschiedliche Farbtiefen auf, insbesondere 32, 24, 16, 8, oder 4 bit. Weiter vorzugsweise können verschiedene Kacheln auch eine Farbtiefe aufweisen, die zwischen diesen Werten liegt. Weiter vorzugsweise können verschiedene Kacheln auch eine Farbtiefe aufweisen, die größer als 32 bit oder kleiner als 4 bit ist. Weiter vorzugsweise ist die Farbtiefe einer Kachel 2 nur so hoch wie zur klaren und deutlichen, d.h. farbechten, Darstellung des in der Kachel 2 enthaltenen Teils des Bildinhalts 1 notwendig. Insbesondere weisen Kacheln 2, die keine Elemente 7, 8, 9, 10 des Bildinhalts 1 enthalten, eine besonders niedrige Farbtiefe, beispielsweise 4 bit oder 1 bit, auf. Vorzugsweise weisen Kacheln 2, die einfarbige Elemente 7, 8, 9, 10 oder einfarbige Teile der Elemente 7, 8, 9, 10, insbesondere Schriftzeichen bzw. Schriftzüge und/oder Nummernzeichen, enthalten, eine niedrige Farbtiefe, insbesondere 16, 8 oder 4 bit, oder einen Wert zwischen diesen Werten, auf. Dadurch kann der Speicherplatz des gerenderten Bildinhalts 1 bzw. der einzelnen Kacheln 2 signifikant reduziert werden.

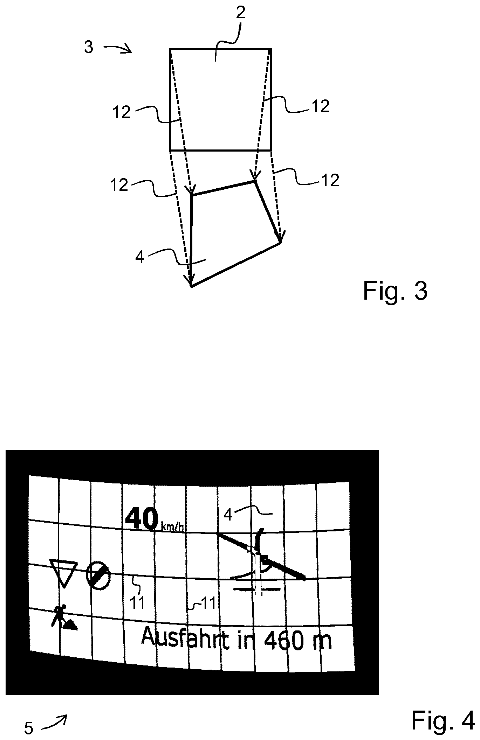

Figur 3 zeigt eine Darstellung einer Perspektivtransformation 3 einer Kachel 2. Die Perspektivtransformation 3 erzeugt in Verfahrensschritt 102 aus einer, vorzugsweise rechteckigen, insbesondere quadratischen, Kachel 2 eine perspektivisch transformierte Kachel 4.

Vorzugsweise wird die Perspektivtransformation 3 durch eine Matrixmultiplikation, insbesondere die Multiplikation mit einer Transformationsmatrix, etwa eine 3x3-Matrix, in Verfahrensschritt 102 ausgeführt. Dabei werden die einzelnen Bildpunkte, insbesondere die vier Eckpunkte, der bevorzugt als Rastergraphik vorliegenden Kachel 2, welche durch Stützvektoren angegeben sind, mit einer Matrix, die eine perspektivische Transformation erzeugt, multipliziert. Stützvektoren sind Vektoren, welche die Lage der Bildpunkte bezüglich eines Ursprungs angeben, insbesondere bezüglich einer der vier Ecken der Kachel 2 oder des aus den Kacheln 2 zusammengesetzten Bildes, d.h. des gerenderten oder erfassten Bildinhalts 1,1`, oder des Mittelpunkts der Kachel 2 oder des aus den Kacheln 2 zusammengesetzten Bildes, d.h. des gerenderten oder erfassten Bildinhalts 1, 1'.

Durch die Perspektivtransformation 3, insbesondere durch Multiplikation der Stützvektoren mit einer Transformationsmatrix, wird in dem gezeigten Ausführungsbeispiel den vier Eckpunkten der Kachel 2 in Verfahrensschritt 102 eine neue Lage zugeordnet, angedeutet durch die vier gestrichelten Pfeile 12. Insbesondere ändern sich dabei Betrag, d.h. Länge, und Richtung, d.h. Orientierung, der Stützvektoren der perspektivisch zu transformierenden Bildpunkte.

Entstehen durch die Perspektivtransformation 3 in Verfahrensschritt 102 Lücken zwischen den Bildpunkten der perspektivisch transformierten Kachel 4, werden diese bevorzugt durch eine Interpolation, insbesondere durch eine lineare Interpolation, in Verfahrensschritt 103 geschlossen. Insbesondere Bildpunkten, welche an durch die Perspektivtransformation 3 verschobene Bildpunkte grenzen und/oder zwischen diesen liegen bzw. angeordnet sind, wird durch die Interpolation ein Wert zugeordnet, so dass die perspektivisch transformierte Kachel 4 einen lückenlosen Teil des transformierten Bildinhalts 5 aufweist, d.h. ohne Artefakte darstellbar ist. Vorzugsweise wird durch die lineare Interpolation in Verfahrensschritt 103 eine Glättung des perspektivisch transformierten Bildinhalts durchgeführt, so dass dieser frei von Artefakten durch ein Head-Up-Display oder eine Anzeigeeinheit darstellbar ist.

Figur 4 zeigt eine Darstellung eines mit einer Ausführungsform des erfindungsgemäßen Verfahrens 100 zusammengesetzten transformierten Bildinhalts 5, der in Verfahrensschritt 104 durch Perspektivtransformationen 3 einzelner Kacheln 2 in Verfahrensschritt 102 erzeugt wurde. Zur besseren Anschaulichkeit sind die Ränder der perspektivisch transformierten Kacheln 4 wie in Fig. 1 durch im Wesentlichen horizontale und im Wesentlichen vertikale Linien 11 gezeigt.

Einzelne Kacheln 2 werden bei der Perspektivtransformation 3 in Verfahrensschritt 102 durch jeweils unterschiedliche Perspektivtransformationen 3, insbesondere jeweils unterschiedliche Transformationsmatrizen, d.h. modular, transformiert und in Verfahrensschritt 104 zu einem perspektivisch transformierten Bildinhalt 5 zusammengesetzt. Der perspektivisch transformierte Bildinhalt 5 wird in Verfahrensschritt 105 vorzugsweise durch ein Head-Up-Display auf eine Projektionsfläche, welche dem Head-Up-Display zugeordnet ist, projiziert, oder von einer Anzeigeeinheit angezeigt, wo er von einem Nutzer, insbesondere dem Fahrer als unverzerrtes Bild visuell wahrgenommen wird. Der perspektivisch transformierte Bildinhalt 5 kann in Verfahrensschritt 105 aber auch, insbesondere durch eine Ausgabeeinheit, beispielsweise als Daten über eine entsprechende Datenschnittstelle, ausgegeben werden. Vorzugsweise wird der perspektivisch transformierte Bildinhalt 5 dabei einer Fahrerassistenzeinrichtung zur Verfügung gestellt.

Durch die separate, d.h. modulare, Perspektivtransformation 3 in Verfahrensschritt 102 erhält jede perspektivisch transformierte Kachel 4 vorzugsweise eine andere Form als angrenzende perspektivisch transformierte Kacheln 4. Insbesondere ergibt sich dadurch ein geschlossener bzw. durchgängiger, vorzugsweise artefaktfreier transformierter Bildinhalt 5, der als ein geschlossenes bzw. durchgängiges, vorzugsweise artefaktfreies Bild dargestellt bzw. angezeigt werden kann. Vorzugsweise werden durch die separaten Perspektivtransformationen 3 angrenzende Kacheln 2 auf die Weise perspektivisch transformiert, dass ihre Ränder geschlossen, d.h. bündig, aneinander angrenzen. Weiter vorzugsweise wird für jede Kachel 2 eine Perspektivtransformation 3 aus einer Vielzahl von Perspektivtransformationen 3 gewählt, bzw. die Perspektivtransformation 3 wird für jede Kachel 2, insbesondere separat, angepasst, so dass sich nach der Perspektivtransformation 3 und dem Zusammensetzen mit benachbarten perspektivisch transformierten Kacheln 4 ein geschlossener, artefaktfreier, perspektivisch transformierter Bildinhalt 5 ergibt. Insbesondere werden die jeweiligen Perspektivtransformationen 3 für einzelne Kacheln 2 so gewählt bzw. angepasst, dass nach dem Zusammensetzen zu dem perspektivisch transformierten Bildinhalt 5 keine Kanten, Knicke, Unstetigkeiten und/oder kein Rauschen im perspektivisch transformierten Bildinhalt 5 bzw. dem darstellbaren, perspektivisch transformierten Bild auftreten.

Weiter vorzugsweise wird der gerenderte oder erfasste Bildinhalt 1, 1' vor der Perspektivtransformation 3 in Verfahrensschritt 101 in Kacheln 2 mit überlappenden Rändern aufgeteilt, d.h. ein Teil des gerenderten oder erfassten Bildinhalts 1, 1' wird durch mehr als eine Kachel 2 dargestellt bzw. ist in mehr als einer Kachel 2 enthalten. Insbesondere überlappen die Ränder angrenzender Kacheln 2. Die überlappenden Ränder, d.h. der überlappende Bereich, können bzw. kann verschiedene Breiten aufweisen, insbesondere 1, 2, 3 oder mehr Bildpunkte. Weiter vorzugsweise wird die Breite der überlappenden Ränder gewählt bzw. angepasst, so dass bei dem Zusammensetzen der perspektivisch transformierten Kacheln 4 in Verfahrensschritt 104 zu einem perspektivisch transformierten Bildinhalt 5 jeder Bereich des durch den perspektivisch transformierten Bildinhalt 5 darstellbaren bzw. anzeigbaren und/oder abbildbaren, perspektivisch transformierten Bildes von wenigstens einer perspektivisch transformierten Kachel 4 abgedeckt wird. Dadurch müssen die Ränder der perspektivisch transformierten Kacheln 4 nicht geschlossen, d.h. bündig, aneinander grenzen, so dass bei der Wahl der passenden Perspektivtransformationen 3 für eine einzelne Kachel 2, bzw. der Anpassung der Perspektivtransformation 3 an eine einzelne Kachel 2, größere Freiheit besteht. Insbesondere müssen perspektivisch transformierte Kacheln 4 dadurch nur im Wesentlichen geschlossen, d.h. bündig, aneinander grenzen.

Vorzugsweise wird bzw. werden der überlappende Bereich bzw. die überlappenden Ränder der perspektivisch transformierten Kacheln 4 beim Zusammensetzen in Verfahrensschritt 104 zu einem perspektivisch transformierten Bildinhalt 5 auf die Weise geglättet, insbesondere gemittelt bzw. interpoliert, dass sich ein nahtloser Übergang zwischen angrenzenden perspektivisch transformierten Kacheln 4 ergibt. Dadurch werden Artefakte, insbesondere Kanten, Knicke, Unstetigkeiten und/oder Rauschen im zusammengesetzten perspektivisch transformierten Bildinhalt 5 besonders zuverlässig vermieden.

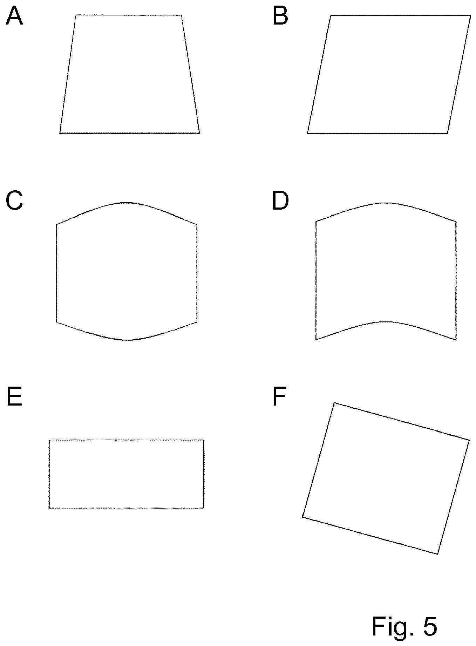

Figur 5 zeigt mehrere Resultate grundlegender Perspektivtransformationen 3 einzelner und/oder mehrerer Kacheln 2.

Figur 5 A zeigt das Resultat einer Perspektivtransformation 3, welche eine rechteckige Kachel 2 in eine trapezförmige Kachel perspektivisch transformiert.

Figur 5 B zeigt das Resultat einer Perspektivtransformation 3, welche eine rechteckige Kachel 2 in eine parallelogrammförmige Kachel perspektivisch transformiert. Dies ist ein Spezialfall der Fig. 5 A.

Figur 5 C zeigt das Resultat einer Perspektivtransformation 3, welche eine rechteckige Kachel 2 in eine gewölbte bzw. tonnenförmige Kachel mit zwei konvexen gegenüberliegenden Seiten perspektivisch transformiert.

Figur 5 D zeigt das Resultat einer Perspektivtransformation 3, welche eine rechteckige Kachel 2 in eine gewölbte bzw. gewundene Kachel mit einer konvexen und einer konkaven gegenüberliegenden Seite perspektivisch transformiert. Dies ist ein Spezialfall der Fig. 5 C

Vorzugsweise werden die in Figur 5 C und D gezeigten Perspektivtransformationen 3 realisiert, indem die Kachel 2 in weitere, insbesondere kleinere, Kacheln aufgeteilt und diese mittels einer oder mehrerer Perspektivtransformationen 3 in der Weise perspektivisch transformiert werden, dass beim Zusammensetzen der weiteren, insbesondere kleineren, Kacheln die gewünschte Kachelform, beispielsweise die gewölbte bzw. tonnenförmige oder gewundene Kachel mit konvexen und/oder konkaven gegenüberliegenden Seiten, bewirkt wird.

Figur 5 E zeigt das Resultat einer Perspektivtransformation 3, welche eine rechteckige Kachel 2 in eine gestauchte bzw. gestreckte Kachel perspektivisch transformiert.

Fig. 5 F zeigt das Resultat einer Perspektivtransformation 3, welche eine rechteckige Kachel 2 in eine, insbesondere gegenüber der rechteckigen Kachel 2, rotierte, d.h. um einen bestimmten Winkel gedrehte, Kachel perspektivisch transformiert.

Vorzugsweise setzt sich die Perspektivtransformation 3 einer einzelnen Kachel 2 aus mehreren grundlegenden Perspektivtransformationen 3 zusammen, deren Resultate in Fig.5 A bis F gezeigt sind. Dadurch ist es möglich, für jede einzelne Kachel 2 eine Perspektivtransformation 3 aus einer Vielzahl von Perspektivtransformationen 3 zu wählen bzw. die Perspektivtransformation 3 anzupassen, so dass sich nach dem Zusammensetzen der perspektivisch transformierten Kacheln 4 in Verfahrensschritt 104 ein besonders artefaktfreier, perspektivisch transformierter Bildinhalt 5, welcher insbesondere frei von Kanten, Knicken, Unstetigkeiten und/oder Rauschen ist, ergibt.

Um zu bestimmen, auf welche Weise ein gerenderter oder erfasster Bildinhalt 1, 1 ` in Verfahrensschritt 102 perspektivisch transformiert werden muss, um dem Fahrer eines Fahrzeugs in Verfahrensschritt 105 als unverzerrtes Bild angezeigt zu werden, wird ein reguläres, insbesondere regelmäßiges, Gitter 13, verzerrt, so dass die Verzerrung einer Anpassung an den Strahlengang des Head-Up-Displays oder der Abbildungseigenschaften der Anzeigeeinheit entspricht.

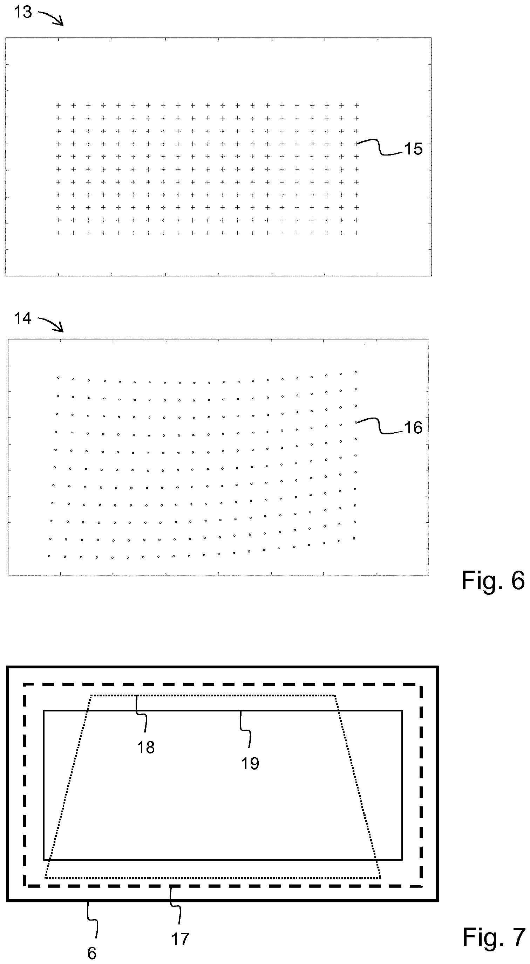

Figur 6 zeigt eine Darstellung eines regulären Gitters 13 (obere Bildteil) und eines durch die Verzerrung resultierenden verzerrten Gitters 14 (unterer Bildteil). Die Gitterpunkte 15 des regulären Gitters 13, als Kreuze dargestellt, werden beim Aufteilen des gerenderten oder erfassten Bildinhalts 1, 1' in mehrere Kacheln 2 verwendet bzw. berücksichtigt. Die Gitterpunkte 16 des verzerrten Gitters 14, als Punkte dargestellt, werden bei der Auswahl der passenden Perspektivtransformation 3 bzw. der Anpassung der Perspektivtransformation 3 einer einzelnen perspektivisch zu transformierenden Kachel 2 verwendet bzw. berücksichtig. Dadurch wird beispielsweise zuverlässig sichergestellt, dass die perspektivische Transformation des gerenderten oder erfassten Bildinhalts 1, 1' in Verfahrensschritt 102 der Anpassung an den Strahlengang des Head-Up-Displays oder der Abbildungseigenschaft der Anzeigeeinheit entspricht.

Vorzugsweise wird die Verzerrung des regulären Gitters 13, d.h. die Überführung in ein verzerrtes Gitter 14, durch eine Perspektivtransformation 3 bzw. eine Kombination aus den grundlegenden Perspektivtransformationen 3, deren Resultate in Fig. 5 gezeigt sind, vorgenommen.

Weiter Vorzugsweise geben die Gitterpunkte 15 des regulären Gitters 13 die Lage der Kacheln 2 an. Weiter vorzugsweise geben die Gitterpunkte 16 des verzerrten Gitters 14 die Lage der perspektivisch transformierten Kacheln 4 an. Insbesondere fungieren die Gitterpunkte 15 des regulären Gitters 13 als Ausgangsstützpunkte der Kacheln 2, vorzugsweise als deren Mittelpunkt oder einer ihrer Eckpunkte. Insbesondere fungieren die Gitterpunkte 16 des verzerrten Gitters 14 als Zielstützpunkte der perspektivisch transformierten Kacheln 4, vorzugsweise als deren Mittelpunkt oder einer ihrer Eckpunkte.

Figur 7 zeigt eine Darstellung der Verteilung von gerendertem oder erfasstem Bildinhalt bzw. von nach dem Verfahren perspektivisch transformierten Bildinhalt eines gerenderten oder erfassten Bildinhalts auf einer bilderzeugenden Einheit. Die bilderzeugende Einheit ist dazu ausgebildet, Bildinhalt auf einer Anzeige 6 in Verfahrensschritt 105 als Bild darzustellen bzw. abzubilden, wobei die Anzeige 6 Teil eines Head-Up-Displays oder einer Anzeigeeinheit sein kann. Von der Anzeige 6 ist vorzugsweise nur ein bestimmter Transformationsbereich 17, dargestellt durch die gestrichelte Linie, zur Darstellung bzw. Abbildung des perspektivisch transformierten Bildinhalts vorgesehen. Die Perspektivtransformationen der einzelnen Kacheln werden vorzugsweise so gewählt bzw. angepasst, dass in Verfahrensschritt 102 perspektivisch transformierter Bildinhalt nicht über den Transformationsbereich 17 hinausragt.

Gerenderter Bildinhalt würde vor der perspektivischen Transformation in Verfahrensschritt 102 beispielsweise innerhalb eines Ausgangsbereichs 19 auf der Anzeige 6 unverzerrt dargestellt. Um bei einer Abbildung des gerenderten Bildinhalts durch eine Head-Up-Display jedoch eine verzerrungsfreie visuelle Wahrnehmung durch einen Benutzer zu gewährleisten, muss die Darstellung des gerenderten Bildinhalts auf der Anzeige 6 an den Strahlengang des Head-Up-Dispalys angepasst werden. Der dementsprechend perspektivisch transformierte Bildinhalt wird nun innerhalb eines Zielbereichs 18 auf der Anzeige 6 verzerrt dargestellt, so dass die durch den Strahlengang des Head-Up-Displays verursachte Verzerrung des dargestellten Bildinhalts gerade kompensiert wird.

Sensorisch, etwa durch eine oder mehrere Kameras mit Fischaugenlinsen, erfasster Bildinhalt würde vor der perspektivischen Transformation in Verfahrensschritt 102 dagegen beispielsweise innerhalb des Zielbereichs 18 auf der Anzeige 6 verzerrt dargestellt. Um bei einer Abbildung des erfassten Bildinhalts durch die Anzeige 6 jedoch eine verzerrungsfreie visuelle Wahrnehmung durch den Benutzer zu gewährleisten, muss der erfasste Bildinhalt daher an die Abbildungseigenschaften der Anzeige 6, insbesondere in Bezug auf die bildgebenden Eigenschaften der erfassenden Sensoreinrichtung, angepasst werden. Der dementsprechend perspektivisch transformierte Bildinhalt wird nun innerhalb des Ausgangsbereichs 19 auf der Anzeige 6 unverzerrt dargestellt.

Im Falle von gerendertem Bildinhalt liegen die Gitterpunkte 16 des in Figur 6 dargestellten verzerrten Gitters 14 vorzugsweise innerhalb des Zielbereichs 18, dargestellt durch eine dünne gepunktete Linie, welcher insbesondere Teil des Transformationsbereichs 17 ist. Der Zielbereich 18 fungiert als Hülle der Gitterpunkte16 des verzerrten Gitters bzw. der Zielstützpunkte der perspektivisch transformierten Kacheln 4. Der Zielbereich 18 ist vorzugsweise kleiner als der Transformationsbereich 17, da die perspektivisch transformierten Kacheln 4 eine laterale Ausdehnung aufweisen und somit verhindert wird, dass perspektivisch transformierte Kacheln 4 und damit Teile des perspektivisch transformierten Bildinhalts 5 über den Transformationsbereich 17 hinausragen.

Entsprechend ist in diesem Fall die Lage der Gitterpunkte 15 des regulären Gitters 13 durch den Ausgangsbereich 19, dargestellt durch eine durchgezogene dünne Linie, angezeigt. Der Ausgangsbereich fungiert als Hülle der Gitterpunkte 15 des regulären Gitters 13 bzw. der Ausgangsstützpunkte der Kacheln 2. Der Ausgangsbereich 19 ist vorzugsweise kleiner als der Transformationsbereich 17, da die Lage einzelner Kacheln 2 durch die Perspektivtransformation 3 auf den Rand der Anzeige 6 bzw. auf den Rand des Transformationsbereichs 17 zu verschoben werden bzw. die laterale Ausdehnung einzelner Kacheln 2 zunehmen kann. Somit wird zuverlässig sichergestellt, dass in mehrere Kacheln 2 aufgeteilter, gerenderter Bildinhalt 1 nach der Perspektivtransformation 3 und Zusammensetzen der einzelnen Kacheln 2 zu einem perspektivisch transformierten Bildinhalt 5 nicht über die Anzeige 6 bzw. den Transformationsbereich 17 der Anzeige 6 hinausragt.

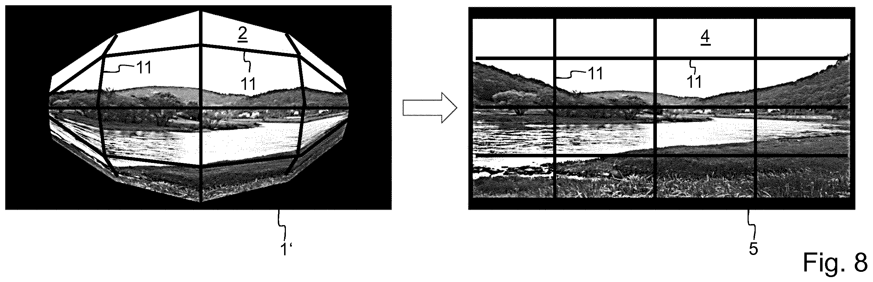

Im linken Abschnitt von Figur 8 ist ein durch eine Kamera erfasster Bildinhalt (1') dargestellt. Der Bildinhalt (1') stellt dabei zumindest einen Teil des Fahrzeugumfelds dar, wie er beispielsweise durch eine Kamera mit einer Fischaugenlinse am Heck des Fahrzeugs erfasst wird. Durch die Fischaugenlinse wird ein großes Gesichtsfeld, d.h. ein großer Winkelbereich, abgedeckt. Allerdings ergibt sich dabei eine Verzerrung des erfassten Bildinhalts (1').

Zur unverzerrten Darstellung des erfassten Bildinhalts (1') auf einer Anzeige wird der erfasste Bildinhalt (1') durch beispielhaft eingezeichnete Linien 11 in mehrere Bereiche, insbesondere Kacheln 2, aufgeteilt. Die Linien 11 definieren dabei die Ränder der Kacheln 2.

Im vorliegenden Beispiel sind diese Bereiche, wie dargestellt, nicht rechteckig. Insbesondere sind die Kacheln 2 nicht uniform, d.h. sie weisen je nach Lage innerhalb des erfassten Bildinhalts (1') unterschiedliche Formen und/oder Größen auf.

Jede der Kacheln 2 wird, insbesondere durch eine Matrixmultiplikation, bevorzugt mit einer 3x3-Transformationsmatrix, perspektivisch transformiert. Vorzugsweise wird dabei jede der Kacheln 2, abhängig von ihrer Lage innerhalb des erfassten Bildinhalts (1'), anhand einer Transformationsmatrix aus einer Gruppe von verschiedenen Transformationsmatrizen perspektivisch transformiert.

Bevorzugt ergibt sich dadurch beim Zusammensetzen der perspektivisch transformierten Kacheln 4 ein perspektivisch transformierter Bildinhalt 5, welcher einem entzerrten Abbild des sensorisch erfassten Bildinhalts (1') entspricht. Dies ist im linken Abschnitt der Figur 8 dargestellt.

Alternativ kann aber auch ein teilweise verzerrter perspektivisch transformierter Bildinhalt 5 erzeugt werden. Insbesondere könnten zum Beispiel Randbereiche des perspektivisch transformierten Bildinhalts 5 gestaucht sein, um im Randbereich eine erhöhte Informationsdichte, beispielsweise ein erweitertes Sichtfeld, zu bewirken.

Das Verfahren kann insbesondere dazu benutzt werden, um durch mehrere Kameras separat erfasste Bildinhalte 1' zu fusionieren. Dabei werden die mehreren Bildinhalte 1' jeweils in mehrere Bereiche, insbesondere Kacheln 2, aufgeteilt und die Perspektivtransformationen für die einzelnen Bereiche 2 in den mehreren Bildinhalten 1' derart gewählt, dass die resultierenden, perspektivisch transformierten Kacheln 4 zu einem einzigen, zusammenhängenden perspektivisch transformierten Bildinhalt 5 zusammengesetzt werden können.

### Bezugszeichenliste

- 1: gerenderter Bildinhalt
- 1': erfasster Bildinhalt
- 2: Kachel
- 3: Perspektivtransformation
- 4: perspektivisch transformierte Kachel
- 5: transformierter Bildinhalt
- 6: Anzeige
- 7: Verkehrsregeln
- 8: Warnhinweis
- 9: Navigationsinformation
- 10: Geschwindigkeitsinformation
- 11: Kachelrand
- 12: Pfeil
- 13: reguläres Gitter
- 14: verzerrtes Gitter
- 15: Gitterpunkt des regulären Gitters
- 16: Gitterpunkt des verzerrten Gitters
- 17: Transformationsbereich
- 18: Zielbereich
- 19: Ausgangsbereich
- 100: Verfahren zum perspektivischen Transformieren und Ausgeben eines gerenderten oder erfassten Bildinhalts durch ein Head-Up-Display oder eine Ausgabeeinheit
- 101: Aufteilen des gerenderten oder erfassten Bildinhalts in mehrere Kacheln
- 102: perspektivisches Transformieren mehrerer Kacheln
- 103: Interpolation
- 104: Zusammensetzen perspektivisch transformierter Kacheln zu einem perspektivisch transformierten Bildinhalt
- 105: Projektion oder Ausgabe von perspektivisch transformiertem Bildinhalt auf eine Projektionsfläche durch ein Head-Up-Display oder durch eine Ausgabeeinheit

## Patentansprüche

1. Verfahren (100) zum perspektivischen Transformieren und Ausgeben eines gerenderten Bildinhalts, wobei der Bildinhalt mehrere Elemente (7, 8, 9, 10) enthält, welche den Betrieb eines Fahrzeugs mittelbar und/oder unmittelbar betreffen, wobei das Verfahren die folgenden Schritte aufweist:
- Aufteilen (101) des Bildinhalts (1') in mehrere Kacheln (2) wobei angrenzende Kacheln (2) überlappende Bildinhalte aufweisen, wobei verschiedene Kacheln (2) unterschiedliche Farbtiefen aufweisen;
- Transformieren (102) des in den einzelnen Kacheln (2) enthaltenen Bildinhalts durch jeweils eine Perspektivtransformation (3), wobei die Perspektivtransformationen der mehreren Kacheln (2) mit den unterschiedlichen Farbtiefen bei der jeweiligen Farbtiefe der perspektivisch zu transformierenden Kachel durchgeführt wird;
- Zusammensetzen (104) der in den einzelnen, perspektivisch transformierten Kacheln (4) enthaltenen perspektivisch transformierten Bildinhalte zu einem einzigen, zusammenhängenden perspektivisch transformierten Bildinhalt (5); und
- Ausgeben (105) des zusammengesetzten, zusammenhängenden perspektivisch transformierten Bildinhaltes (5),
wobei das Ausgeben (105) des zusammengesetzten, zusammenhängenden perspektivisch transformierten Bildinhaltes (5) ein Anzeigen des zusammengesetzten, zusammenhängenden perspektivisch transformierten Bildinhalts (5) auf einer Anzeigeeinheit des Fahrzeugs aufweist,
wobei das Anzeigen des zusammengesetzten, zusammenhängenden perspektivisch transformierten Bildinhalts (5) auf der Anzeigeeinheit des Fahrzeugs ein Projizieren des zusammengesetzten, zusammenhängenden perspektivisch transformierten Bildinhalts auf eine Projektionsfläche des Fahrzeugs durch eine Projektionseinheit aufweist,
wobei die in den einzelnen Kacheln (2) enthaltenen Bildinhalte in der Weise transformiert werden, dass der perspektivisch transformierte Bildinhalt (5) von der Anzeigeeinheit in wenigstens einem ersten Bereich ungestaucht und in wenigstens einem zweiten Bereich gestaucht dargestellt wird,
wobei der Bildinhalt beim Transformieren an die Abbildungseigenschaften der Anzeigeeinheit (6) angepasst wird, und
wobei die in dem Bildinhalt enthaltenen Elemente zu beachtende Verkehrsregeln (7), Warnhinweise (8), Navigationsinformation (9) und/oder Geschwindigkeitsinformation (10) aufweisen.

2. Verfahren (100) nach Anspruch 1, wobei beim Transformieren (102) der in den einzelnen Kacheln (2) enthaltene Bildinhalt hinsichtlich mindestens einem der folgenden Merkmale perspektivisch transformiert wird: Trapezform, Streckung bzw. Stauchung, Rotation, Versatz.

3. Verfahren (100) nach einem der vorangehenden Ansprüche, wobei der Bildinhalt (1, 1') als Rastergraphik vorliegt.

4. Verfahren (100) nach einem der vorangehenden Ansprüche, wobei bei der Perspektivtransformation (3) eine Interpolation (103), insbesondere eine lineare Interpolation, einzelner Bildpunkte einer Kachel (4), insbesondere der Bildpunkte, welche an durch die Perspektivtransformation (3) verschobene Bildpunkte grenzen und/oder zwischen diesen liegen, durchgeführt wird.

5. Verfahren (100) nach einem der vorangehenden Ansprüche, wobei die in den einzelnen Kacheln (2) enthaltenen Bildinhalte durch Multiplikation mit einer Transformationsmatrix perspektivisch transformiert (102) werden.

6. Verfahren (100) nach Anspruch 5, wobei die Transformationsmatrix aus einer Vielzahl von Transformationsmatrizen gewählt wird.

7. Verfahren (100) nach einem der vorangehenden Ansprüche, wobei das perspektivische Transformieren (102) der in den einzelnen Kacheln (2) enthaltenen Bildinhalte von einem Graphikmodul über eine Graphik-Programmierschnittstelle, insbesondere OpenVG, durchgeführt wird.

8. Verfahren (100) nach einem der vorangehenden Ansprüche, wobei die in den perspektivisch transformierten Kacheln (4) enthaltenen perspektivisch transformierten Bildinhalte in einem Puffer-Speicher abgelegt werden.

9. Verfahren (100) nach Anspruch 8, wobei nur die Bildinhalte eines Teils der mehreren Kacheln (2) perspektivisch transformiert werden (102) und die Bildinhalte der restlichen transformierten Kacheln (4) zum Zusammensetzen (104) des perspektivisch transformierten Bildinhalts (5) aus dem Puffer-Speicher geladen werden.

10. Verfahren (100) nach einem der vorangehenden Ansprüche, wobei nur die Bildinhalte des Teils der mehreren Kacheln (2) perspektivisch transformiert werden (102), welcher Elemente (7, 8, 9, 10) des Bildinhalts (1, 1') enthält, die sich bezüglich eines zuvor zu transformierenden und auszugebenden, insbesondere anzuzeigenden oder zu projizierenden, Bildinhalts geändert haben.

11. Verfahren (100) nach einem der vorangehenden Ansprüche, wobei die Bildinhalte der mehreren Kacheln (2) bei der perspektivischen Transformation (102) durch eine Punkt- oder Linienspiegelung gespiegelt und zu einem perspektivisch transformierten, gespiegelten Bildinhalt (5) zusammengesetzt werden (104).

12. Fahrzeug, insbesondere Kraftfahrzeug, aufweisend ein Ausgabesystem zum perspektivischen Transformieren und Ausgeben eines gerenderten Bildinhalts mit einem Verfahren (100) nach einem der vorangehenden Ansprüche, wobei der Bildinhalt mehrere Elemente (7, 8, 9, 10) enthält, welche den Betrieb des Fahrzeugs mittelbar und/oder unmittelbar betreffen, aufweisend
- eine Steuereinheit, welche ein erstes Modul, eingerichtet zum Aufteilen (101) des anzuzeigenden Bildinhalts (1') in mehrere Kacheln (2), wobei angrenzende Kacheln (2) überlappende Bildinhalte aufweisen, wobei verschiedene Kacheln (2) unterschiedliche Farbtiefen aufweisen, ein zweites Modul, eingerichtet zum Transformieren (102) des in den einzelnen Kacheln (2) enthaltenen Bildinhalts durch jeweils eine Perspektivtransformation (3), wobei das zweite Modul dazu eingerichtet ist, die Perspektivtransformationen der mehreren Kacheln (2) mit den unterschiedlichen Farbtiefen bei der jeweiligen Farbtiefe der perspektivisch zu transformierenden Kachel durchzuführen, und ein drittes Modul, eingerichtet zum Zusammensetzen (104) der in den einzelnen, perspektivisch transformierten Kacheln (4) enthaltenen perspektivisch transformierten Bildinhalte zu einem einzigen, zusammenhängenden perspektivisch transformierten Bildinhalt (5), aufweist; und
- eine Ausgabeeinheit, welche zum Ausgeben (105) des zusammengesetzten, zusammenhängenden perspektivisch transformierten Bildinhalts (5) eingerichtet ist, wobei die Ausgabeeinheit eine Projektionseinheit und eine Projektionsfläche des Fahrzeugs aufweist und die Projektionseinheit dazu eingerichtet ist, den zusammengesetzten, zusammenhängenden perspektivisch transformierten Bildinhalt (5) auf die Projektionsfläche des Fahrzeugs zu projizieren,
wobei die Steuereinheit eingerichtet ist, die in den einzelnen Kacheln (2) enthaltenen Bildinhalte in der Weise zu transformieren, dass der perspektivisch transformierte Bildinhalt (5) von der Ausgabeeinheit in wenigstens einem ersten Bereich ungestaucht und in wenigstens einem zweiten Bereich gestaucht dargestellt wird,
wobei die Steuereinheit eingerichtet ist, den Bildinhalt beim Transformieren an die Abbildungseigenschaften der Ausgabeeinheit (6) anzupassen, und
wobei die in dem Bildinhalt enthaltenen Elemente zu beachtende Verkehrsregeln (7), Warnhinweise (8), Navigationsinformation (9) und/oder Geschwindigkeitsinformation (10) aufweisen.

## Claims

1. Method (100) for the perspective transformation and outputting of a rendered image content, wherein the image content contains a plurality of elements (7, 8, 9, 10), which indirectly and/or directly concern the operation of a vehicle, wherein the method comprises the following steps:
- dividing (101) the image content (1') into a plurality of tiles (2), wherein adjoining tiles (2) have overlapping image contents, wherein different tiles (2) have different colour depths;
- transforming (102) the image content contained in the individual tiles (2) by means of a respective perspective transformation (3), wherein the perspective transformations of the plurality of tiles (2) having the different colour depths are carried out at the respective colour depth of the tile that is to be perspectively transformed;
- combining (104) the perspectively transformed image contents contained in the individual, perspectively transformed tiles (4) to form a single, contiguous perspectively transformed image content (5); and
- outputting (105) the combined, contiguous perspectively transformed image content (5),
wherein outputting (105) the combined, contiguous perspectively transformed image content (5) comprises displaying the combined, contiguous perspectively transformed image content (5) on a display unit of the vehicle,
wherein displaying the combined, contiguous perspectively transformed image content (5) on the display unit of the vehicle comprises projecting the combined, contiguous perspectively transformed image content onto a projection surface of the vehicle by means of a projection unit,
wherein the image contents contained in the individual tiles (2) are transformed in such a way that the perspectively transformed image content (5) is represented by the display unit in an uncompressed manner in at least one first region and in a compressed manner in at least one second region,
wherein the image content is adapted to the imaging properties of the display unit (6) during the transformation, and
wherein the elements contained in the image content comprise traffic regulations (7) to be complied with, warning indications (8), navigation information (9) and/or speed information (10).

2. Method (100) according to Claim 1, wherein during the transformation (102) the image content contained in the individual tiles (2) is perspectively transformed with regard to at least one of the following features: trapezium shape, stretching and/or compression, rotation, offset.

3. Method (100) according to either of the preceding claims, wherein the image content (1, 1') is present as raster graphics.

4. Method (100) according to any of the preceding claims, wherein an interpolation (103), in particular a linear interpolation, of individual pixels of a tile (4), in particular of the pixels which adjoin pixels displaced by the perspective transformation (3) and/or lie between said pixels, is carried out during the perspective transformation (3).

5. Method (100) according to any of the preceding claims, wherein the image contents contained in the individual tiles (2) are perspectively transformed (102) by multiplication by a transformation matrix.

6. Method (100) according to Claim 5, wherein the transformation matrix is chosen from a multiplicity of transformation matrices.

7. Method (100) according to any of the preceding claims, wherein the perspective transformation (102) of the image contents contained in the individual tiles (2) is carried out by a graphics module via a graphics programming interface, in particular OpenVG.

8. Method (100) according to any of the preceding claims, wherein the perspectively transformed image contents contained in the perspectively transformed tiles (4) are stored in a buffer memory.

9. Method (100) according to Claim 8, wherein only the image contents of a portion of the plurality of tiles (2) are perspectively transformed (102) and the image contents of the remaining transformed tiles (4) are loaded from the buffer memory for the purpose of combining (104) the perspectively transformed image content (5).

10. Method (100) according to any of the preceding claims, wherein only the image contents of that portion of the plurality of tiles (2) are perspectively transformed (102) which contains elements (7, 8, 9, 10) of the image content (1, 1') which have changed with respect to an image content that was previously to be transformed and to be output, in particular to be displayed or to be projected.

11. Method (100) according to any of the preceding claims, wherein the image contents of the plurality of tiles (2) are mirrored by a point or line mirroring during the perspective transformation (102) and are combined (104) to form a perspectively transformed, mirrored image content (5).

12. Vehicle, in particular motor vehicle, comprising an output system for the perspective transformation and outputting of a rendered image content by a method (100) according to any of the preceding claims, wherein the image content contains a plurality of elements (7, 8, 9, 10), which indirectly and/or directly concern the operation of the vehicle, comprising
- a control unit comprising a first module, configured for dividing (101) the image content (1') to be displayed into a plurality of tiles (2), wherein adjoining tiles (2) have overlapping image contents, wherein different tiles (2) have different colour depths, a second module, configured for transforming (102) the image content contained in the individual tiles (2) by means of a respective perspective transformation (3), wherein the second module is configured to carry out the perspective transformations of the plurality of tiles (2) having the different colour depths at the respective colour depth of the tile that is to be perspectively transformed, and a third module, configured for combining (104) the perspectively transformed image contents contained in the individual, perspectively transformed tiles (4) to form a single, contiguous perspectively transformed image content (5); and
- an output unit, configured for outputting (105) the combined, contiguous perspectively transformed image content (5), wherein the output unit comprises a projection unit and a projection surface of the vehicle and the projection unit is configured to project the combined, contiguous perspectively transformed image content (5) onto the projection surface of the vehicle, wherein the control unit is configured to transform the image contents contained in the individual tiles (2) in such a way that the perspectively transformed image content (5) is represented by the output unit in an uncompressed manner in at least one first region and in a compressed manner in at least one second region,
wherein the control unit is configured to adapt the image content to the imaging properties of the output unit (6) during the transformation, and
wherein the elements contained in the image content comprise traffic regulations (7) to be complied with, warning indications (8), navigation information (9) and/or speed information (10).

## Revendications

1. Procédé (100) de transformation en perspective et de restitution d'un contenu d'image rendu, dans lequel le contenu d'image comprend de multiples éléments (7, 8, 9, 10) qui concernent directement et/ou indirectement le fonctionnement d'un véhicule, le procédé comprenant les étapes suivantes :
- la division (101) du contenu d'image (1') en de multiples pavés (2), des pavés (2) adjacents comprenant des contenus d'image qui se chevauchent, des pavés (2) différents présentant des profondeurs de couleur différentes ;
- la transformation (102) du contenu d'image contenu dans les pavés (2) individuels par une transformation de la perspective (3) respective, les transformations de la perspective des multiples pavés (2) qui présentent les profondeurs de couleur différentes étant effectuées à la profondeur de couleur respective du pavé à transformer en perspective ;
- la composition (104) des contenus d'image individuels transformés en perspective contenus dans les pavés (4) individuels transformés en perspective en un contenu d'image (5) individuel, cohérent, transformé en perspective ; et
- la restitution (105) du contenu d'image composite, cohérent, transformé en perspective (5),
dans lequel la restitution (105) du contenu d'image composite, cohérent, transformé en perspective (5) comprend un affichage du contenu d'image composite, cohérent, transformé en perspective (5) sur une unité d'affichage du véhicule,
dans lequel l'affichage du contenu d'image composite, cohérent, transformé en perspective (5) sur l'unité d'affichage du véhicule comprend la projection du contenu d'image composite, cohérent, transformé en perspective sur une surface de projection du véhicule par une unité de projection,
dans lequel les contenus d'image contenus dans les pavés (2) individuels sont transformés de telle sorte que le contenu d'image (5) transformé en perspective soit représenté par l'unité d'affichage dans au moins une première zone non comprimée et dans au moins une deuxième zone comprimée,
dans lequel le contenu d'image est adapté aux propriétés de formation d'image de l'unité d'affichage (6) lors de la transformation, et
dans lequel les éléments contenus dans le contenu d'image comprennent des règles de circulation (7), des avertissements (8), des informations de navigation (9) et/ou des informations de vitesse (10) à respecter.

2. Procédé (100) selon la revendication 1, dans lequel, lors de la transformation (102), le contenu d'image contenu dans les pavés (2) individuels est transformé en perspective en ce qui concerne au moins l'une des caractéristiques suivantes : forme trapézoïdale, étirement ou compression, rotation, décalage.

3. Procédé (100) selon l'une des revendications précédentes, dans lequel le contenu d'image (1, 1') est présent sous forme de graphique tramé.

4. Procédé (100) selon l'une des revendications précédentes, dans lequel, lors de la transformation de la perspective (3), il est procédé à une interpolation (103), en particulier une interpolation linéaire, de différents points d'image d'un pavé (4), en particulier des points d'image qui sont adjacents à des points d'image décalés par la transformation de la perspective (3) et/ou qui sont situés entre ces points.

5. Procédé (100) selon l'une des revendications précédentes, dans lequel les contenus d'image contenus dans les pavés (2) individuels sont transformés en perspective (102) par multiplication par une matrice de transformation.

6. Procédé (100) selon la revendication 5, dans lequel la matrice de transformation est choisie parmi une pluralité de matrices de transformation.

7. Procédé (100) selon l'une des revendications précédentes, dans lequel la transformation de la perspective (102) des contenus d'image contenus dans les pavés (2) individuels est effectuée par un module graphique par l'intermédiaire d'une interface de programmation graphique, notamment OpenVG.

8. Procédé (100) selon l'une des revendications précédentes, dans lequel les contenus d'image transformés en perspective contenus dans les pavés (4) transformés en perspective sont stockés dans une mémoire tampon.

9. Procédé (100) selon la revendication 8, dans lequel seul le contenu d'image d'une partie des multiples pavés (2) est transformé en perspective (102) et le contenu d'image des pavés (4) transformés restants est chargé à partir de la mémoire tampon pour composer (104) le contenu d'image (5) transformé en perspective.

10. Procédé (100) selon l'une des revendications précédentes, dans lequel seuls sont transformés en perspective (102) les contenus d'image de la partie de la pluralité de pavés (2) qui contient des éléments (7, 8, 9, 10) du contenu d'image (1, 1') qui ont changé par rapport à un contenu d'image précédent à transformer et à délivrer, notamment à afficher ou à projeter.

11. Procédé (100) selon l'une des revendications précédentes, dans lequel les contenus d'image des multiples pavés (2) sont réfléchis par une réflexion ponctuelle ou linéaire lors de la transformation de la perspective (102) et assemblés (104) en un contenu d'image (5) transformé en perspective et réfléchi.

12. Véhicule, en particulier véhicule à moteur, comprenant un système de restitution destiné à transformer en perspective et à restituer un contenu d'image rendu par un procédé (100) selon l'une des revendications précédentes, dans lequel le contenu d'image comprend de multiples éléments (7, 8, 9, 10) qui concernent directement et/ou indirectement le fonctionnement du véhicule, comprenant
- une unité de commande qui comprend un premier module qui est conçu pour diviser (101) le contenu d'image (1') à afficher en de multiples pavés (2), des pavés (2) adjacents comprenant des contenus d'image qui se chevauchent, des pavés (2) différents présentant des profondeurs de couleur différentes, un deuxième module qui est conçu pour transformer (102) le contenu d'image contenu dans les pavés (2) individuels par une transformation de la perspective (3) respective, le deuxième module étant conçu pour effectuer les transformations de la perspective des multiples pavés (2) qui présentent les profondeurs de couleur différentes à la profondeur de couleur respective des pavés à transformer, et un troisième module qui est conçu pour composer (104) des contenus d'image individuels contenus dans les pavés (4) individuels, transformés en perspective en un contenu d'image (5) individuel, cohérent, transformé en perspective ; et
- une unité de restitution qui est conçue pour restituer (105) le contenu d'image composite, cohérent, transformé en perspective (5), l'unité de restitution comprenant une unité de projection et une surface de projection du véhicule, et l'unité de projection étant conçue pour projeter le contenu d'image composite, cohérent, transformé en perspective (5) sur la surface de projection du véhicule,
dans lequel l'unité de commande est conçue pour transformer les contenus d'image contenus dans les pavés (2) individuels de telle sorte que le contenu d'image (5) transformé en perspective soit représenté par l'unité d'affichage dans au moins une première zone non comprimée et dans au moins une deuxième zone comprimée,
dans lequel l'unité de commande est conçue pour adapter le contenu d'image aux propriétés de formation d'image de l'unité de restitution (6) lors de la transformation, et
dans lequel les éléments contenus dans le contenu d'image comprennent des règles de circulation (7), des avertissements (8), des informations de navigation (9) et/ou des informations de vitesse (10) à respecter.
